# EUROPÄISCHE PATENTANMELDUNG

(11) **EP 1 388 392 A1**
(43) Veröffentlichungstag der Anmeldung: **11.02.2004**
(21) Anmeldenummer: 03015585.7
(22) Anmeldetag: 12.07.2003
(51) Int. Cl.: B23Q 11/10

(54) **Schmierstoffabgabevorrichtung**

(30) Priorität: 06.08.2002 DE 10235996
(71) Anmelder: SPETEC Gesellschaft für Spektroskopie und Labortechnik mbH, 85435 Erding (DE)
(72) Erfinder: Mairoth, Karl, 84416 Taufkirchen (DE); Rickert, Friedhelm, 85435 Erding (DE)
(74) Vertreter: Bauer, Friedrich, Dipl.-Ing.

(57) **Zusammenfassung**

Vorgesehen ist eine Vorrichtung zur Abgabe eines Schmierstoffes an eine Bearbeitungsfläche eines Werkstückes, mit einer Schmierstoffabgabeeinrichtung (12) und einem Schaft (2) zur Aufnahme der Vorrichtung in einem Spannfutter einer Werkzeugmaschine, wobei die Schmierstoffabgabeeinrichtung (12) so ausgebildet ist, dass sie den in der Vorrichtung vorliegenden Schmierstoff zur Abgabe unter Druck setzt und an einem Auslassbereich (11) ausbringt.

## Beschreibung

Die vorliegende Erfindung betrifft eine Vorrichtung zur Abgabe eines Schmierstoffes an eine Bearbeitungsfläche eines Werkstückes nach dem Oberbegriff des Anspruchs 1.

Wenn metallische Werkstoffe aus beispielsweise Stahl mit einer Werkzeugmaschine bearbeitet werden, wird zum Zwecke der Kühlung und der Spanabfuhr sowie der Verringerung der Reibung zwischen dem Werkstück und dem Werkzeug eine Emulsion aus Wasser und Öl aufgebracht. Bei der eingangs genannten Werkzeugmaschine kann es sich um eine numerisch gesteuerte automatische Werkzeugmaschine handeln, die mit einem Werkzeugwechsler und Werkzeugmagazin versehen ist und mit der beispielsweise auch Gewinde gefertigt werden können, die bei einer spanenden Formgebung mit einem Gewindebohrer geschnitten werden.

Es ist auch möglich, ein solches Gewinde spanlos mit einem Gewindeformer auszubilden, wobei in beiden Fällen bei Gewinden mit sehr kleinem Nenndurchmesser das Problem auftritt, dass die aus Wasser und Öl gebildete Emulsion nicht mehr die Wand des Kernloches benetzt, an der das Gewinde hergestellt werden soll. Aufgrund des kleinen Nenndurchmessers eines solchen mit einem Gewinde zu versehenden Kernlochs oder Durchgangslochs tritt an der Lochrandoberfläche eine Oberflächenspannung auf, die ein Eindringen der Emulsion in das Loch verhindert. Auch ist zu erwähnen, dass ein mit einem Gewinde zu versehendes Sackloch bei normaler Arbeitsumgebung mit Luft gefüllt ist und daher die Emulsion nicht die Lochwandung erreicht.

Wenn nun in einem solchen Loch mit einem Gewindeformer oder einem Gewindebohrer unter Zuhilfenahme einer Werkzeugmaschine ein Gewinde ausgearbeitet werden soll, dann führt dies oftmals aufgrund der hohen Reibungswerte im Loch zu einem Gewaltbruch des Werkzeugs, so dass das im Loch verbliebene Werkzeugzeug dazu führt, dass das Werkstück insgesamt zum Ausschuss geworden ist.

Um dieses Problem zu umgehen, wird bislang so vorgegangen, dass solche Gewinde von Hand bearbeitet werden derart, dass selbst bei einer Serienfertigung von größeren Werkstückzahlen mit einem Bearbeitungszentrum solche Gewinde an den Werkstücken dann von Hand geschnitten oder geformt werden. Es liegt in der Natur der Dinge, dass eine solche manuelle Bearbeitung kostenaufwendig ist.

Der Erfindung liegt nunmehr die Aufgabe zugrunde, eine Vorrichtung zur Abgabe eines Schmierstoffs an eine Bearbeitungsfläche eines Werkstücks zu schaffen, mit der auch kleine Gewinde maschinell hergestellt werden können, ohne dass die Gefahr des Bruchs des Werkzeugs besteht.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft nunmehr eine Vorrichtung zur Abgabe eines Schmierstoffes an einem Bearbeitungsfläche eines Werkstücks, wobei die Vorrichtung eine Schmierstoffabgabeeinrichtung und einen Schaft zur Aufnahme der Vorrichtung in einem Spannfutter einer Werkzeugmaschine aufweist und dabei die Schmierstoffabgabeeinrichtung so ausgebildet ist, dass sie den in der Vorrichtung vorliegenden Schmierstoff zur Abgabe unter Druck setzt und an einem Auslassbereich ausbringt. Damit kann die erfindungsgemäße Schmierstoffabgabevorrichtung direkt im Werkzeugspannfutter einer Werkzeugmaschine eingespannt werden und über die Vorschubbewegung des Spannfutters so an die Bearbeitungsfläche eines Werkstücks, beispielsweise ein mit einem Gewinde zu versehendes Kernloch herangeführt werden und der Schmierstoff in der Form beispielsweise eines Schneidöls direkt in das Kernloch ausgebracht werden.

Die Schmierstoffabgabeeinrichtung ist dabei so ausgebildet, dass sie den in der Vorrichtung vorliegenden Schmierstoff zur Abgabe unter Druck setzt und an einem Auslassbereich ausbringt.

Der Schmierstoff liegt dabei in einer Aufnahmekammer der Vorrichtung, die mit der Schmierstoffabgabeeinrichtung in Fluidverbindung steht, weitgehend drucklos vor und kann nachgefüllt werden, da die Aufnahmekammer von außerhalb der Vorrichtung wiederbefüllbar ist, ohne dass zur Wiederbefüllung der Aufnahmekammer eine Demontage der erfindungsgemäßen Schmierstoffabgabevorrichtung vom Spannfutter der Werkzeugmaschine stattfinden müsste oder die Schmierstoffabgabevorrichtung zerlegt werden müsste.

Zur Wiederbefüllung der Aufnahmekammer ist es dabei nach der Erfindung vorgesehen, dass die Aufnahmekammer über ein Rückschlagventil von außen befüllt werden kann, wobei dieses Rückschlagventil auch dafür sorgt, dass die Schmierstoffabgabevorrichtung in jeder beliebigen Winkellage eingesetzt werden kann, also beispielsweise von oben auf eine Bearbeitungsfläche vertikal abgesenkt werden kann oder aber auch in einer horizontalen Lage an eine Bearbeitungsfläche herangeführt werden kann oder in einem beliebigen Zwischenwinkel.

Ein ähnliches Rückschlagventil kann dabei nach der Erfindung auch zwischen der Aufnahmekammer und der Schmierstoffabgabeeinrichtung vorgesehen sein, das dafür sorgt, dass ein von der Aufnahmekammer in die Schmierstoffabgabeeinrichtung gelangter Schmierstoff nicht wieder in die Aufnahmekammer zurückbefördert wird.

In ähnlicher Weise ist nach der Erfindung vorgesehen, dass im Auslassbereich der Schmierstoffabgabeeinrichtung ein Rückschlagventil vorgesehen ist, so dass der von der Schmierstoffabgabeeinrichtung ausgebrachte Schmierstoff nicht wieder in die Schmierstoffabgabeeinrichtung zurückgesaugt wird. Dieses Rückschlagventil sorgt auch dafür, dass keine Umgebungsluft in die Schmierstoffabgabeeinrichtung zurückgesaugt wird.

Die Schmierstoffabgabeeinrichtung weist dabei einen gegen eine Druckfeder bewegbaren Kolben auf, der den in einer Kolbenkammer der Schmierstoffabgabeeinrichtung vorliegenden Schmierstoff unter Druck setzt und über eine am Auslassbereich vorgesehene Düse ausbringt. Der Kolben der Schmierstoffabgabeeinrichtung wird dabei mittels einer Zustellbewegung der an der Bearbeitungsfläche anliegenden Schmierstoffabgabevorrichtung gegen die Druckfeder in Richtung der Kolbenkammer axial bewegt und setzt dabei den in der Kolbenkammer vorliegenden Schmierstoff unter Druck. Der Kolben weist einen Durchlass auf, durch den der unter Druck gesetzte Schmierstoff in Richtung zu der Düse hindurchtritt, wobei die Düse mit ihrer Auslassöffnung an oder in einem Kernloch angeordnet ist und den so unter Druck gesetzten Schmierstoff direkt im Kernloch ausbringt.

Nach einer Weiterbildung der Erfindung ist es vorgesehen, dass am Auslassbereich der Schmierstoffabgabeeinrichtung unterschiedlich geformten Bearbeitungsflächen entsprechende Düsen lösbar anbringbar sind. Damit wird erreicht, dass die Schmierstoffabgabevorrichtung insgesamt unterschiedlichen Anwendungsfällen entsprechend angepasst werden kann, indem lediglich die an der Schmierstoffabgabeeinrichtung angebrachten Düsen ausgetauscht werden, die den jeweiligen Bearbeitungsflächen entsprechend ausgebildet sind.

Wenn die erfindungsgemäße Schmierstoffabgabevorrichtung sich im Einsatz befindet, dann sinkt der Schmierstoffpegel in der Aufnahmekammer naturgemäß ab. Darüber hinaus kann die erfindungsgemäße Schmierstoffabgabevorrichtung auch in beispielsweise horizontaler Lage an eine Bearbeitungsfläche herangeführt werden, so dass sich auch die Aufnahmekammer in horizontaler Lage befindet und damit der Schmierstoffpegel in der Aufnahmekammer wieder eine andere Höhe einnimmt. Um einen sicheren Schmierstofftransport aus der Aufnahmekammer in die Kolbenkammer zu erreichen, ist es daher nach der Erfindung vorgesehen, dass zwischen der Aufnahmekammer und der Schmierstoffabgabeeinrichtung ein um die Längsmittelachse der Schmierstoffabgabevorrichtung drehbares Saugrohr angeordnet ist, über das mittels einer Rückstellbewegung des Kolbens Schmierstoff in die Kolbenkammer gesaugt wird. Das drehbare Saugrohr befindet sich in einer vertikalen Anordnung der Schmierstoffabgabevorrichtung relativ zur Bearbeitungsfläche im Bereich der tiefsten Stelle der Aufnahmekammer und kann daher sicher Schmierstoff ansaugen. Wenn nun die Schmierstoffabgabevorrichtung in einer horizontalen Lage an die Bearbeitungsfläche des Werkstücks herangeführt wird, oder in einer Zwischenlage, dann dreht sich das drehbare Saugrohr in der Aufnahmekammer aufgrund der Schwerkraft so, dass sich der Ansaugbereich des Saugrohrs jeweils in der tiefsten Lage befindet und damit in einer von Schmierstoff umgebenen Lage, so dass ein sicheres Ansaugen von Schmierstoff durch das Saugrohr auch in dieser Lage erreicht wird.

Die Erfindung wird im Folgenden anhand der Zeichnung näher erläutert. Diese zeigt in:
Fig. 1 eine teilweise geschnittene Draufsichtansicht auf eine Ausführungsform der Schmierstoffabgabevorrichtung nach der vorliegenden Erfindung;
Fig. 2A bis 2D die Schmierstoffabgabevorrichtung in unterschiedlichen Betriebsstellungen;
Fig. 3 eine Draufsichtansicht auf einen Kolben der Schmierstoffabgabeeinrichtung;
Fig. 4A eine Draufsichtansicht einer Düse der Schmierstoffabgabevorrichtung, angeordnet an einem Kernloch;
Fig. 4B eine Ansicht der Düse nach Fig. 4A in einer Ansicht von unten;
Fig. 5A eine Draufsichtansicht einer weiteren Düse der Schmierstoffabgabevorrichtung, angeordnet an einem Kernloch; und
Fig. 5B eine Ansicht von unten auf die Düse nach Fig. 5A.

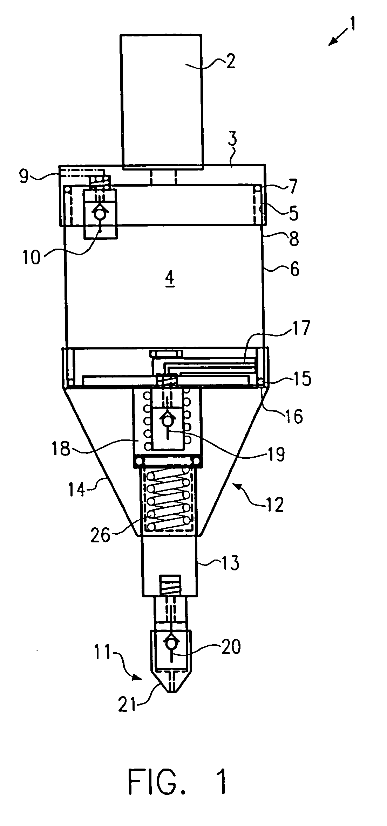

Fig. 1 der Zeichnung zeigt in einer Draufsichtansicht eine teilweise geschnittene Darstellung einer Ausführungsform einer Schmierstoffabgabevorrichtung 1 nach der vorliegenden Erfindung.

Die Schmierstoffabgabevorrichtung 1 kann über einen Schaft 2 in ein Spannfutter einer nicht dargestellten Werkzeugmaschine aufgenommen werden. Bei dieser kann es sich beispielsweise um ein Bearbeitungscenter handeln, also eine numerische gesteuerte Werkzeugmaschine, die ein Werkzeugmagazin besitzt und einen Werkzeugwechsler, mit dem die Schmierstoffabgabevorrichtung 1 aus dem Werkzeugmagazin entnommen und in das Spannfutter der Werkzeugmaschine eingesetzt werden kann. Die Schmierstoffabgabevorrichtung ist daher zur Integration in den automatischen Werkstückbearbeitungsvorgang einer solchen Werkzeugmaschine geeignet.

Am Schaft 2 befindet sich beispielsweise über eine lösbare Schraubverbindung ein Aufnahmeblock oder oberer Deckel 3 angeordnet. Der obere Deckel 3 weist an seiner einer Aufnahmekammer 4 für den Schmierstoff zugewandten Innenseite 5 ein Innengewinde auf, so dass der obere Deckel 3 mit einem rohrförmigen Körper 6 verschraubt werden kann. Um ein Austreten von Schmierstoff aus der Aufnahmekammer 4 zu vermeiden, ist zwischen dem rohrförmigen Körper 6 und dem oberen Deckel 3 ein O-Ring 7 angeordnet, der in einer am oberen Deckel 3 ausgebildeten Nut aufgenommen ist.

Der rohrförmige Körper 6 kann nach einer Ausführungsform aus einem durchsichtigen Kunststoffwerkstoff gebildet sein, was den Vorteil mit sich bringt, dass das Schmierstoffniveau in der Aufnahmekammer 4 jederzeit visuell festgestellt werden kann. Sollte dieses Schmierstoffniveau unter einen bestimmten Wert gefallen sein; dann ist es möglich, den Schmierstoffvorrat über eine Einfüllöffnung 9 von außen wieder aufzufüllen, ohne dass die Schmierstoffabgabevorrichtung 1 dafür zerlegt werden müsste. Die Aufnahmekammer 4 steht dabei mit der Einfüllöffnung 9 über ein Rückschlagventil 10 in Fluidverbindung, das verhindert, dass bei einer beispielsweise horizontalen Lage der Schmierstoffabgabevorrichtung 1 Schmierstoff über die Einfüllöffnung 9 austritt. Der Benutzer ist in der Wahl des für den jeweiligen Anwendungsfall geeigneten Schmierstoffs frei.

Wie es ohne weiteres ersichtlich ist, wird die Aufnahmekammer 4 in Richtung zum Auslassbereich 11 hin über einen weiteren Aufnahmeblock oder unteren Deckel abgeschlossen, der in der vorliegenden Ausführungsform gleichzeitig die Schmierstoffabgabeeinrichtung 12 aufnimmt. Die Schmierstoffabgabeeinrichtung 12 weist unter anderem einen Kolben 13 auf, so dass der untere Deckel im Folgenden als Kolbenblock 14 bezeichnet wird.

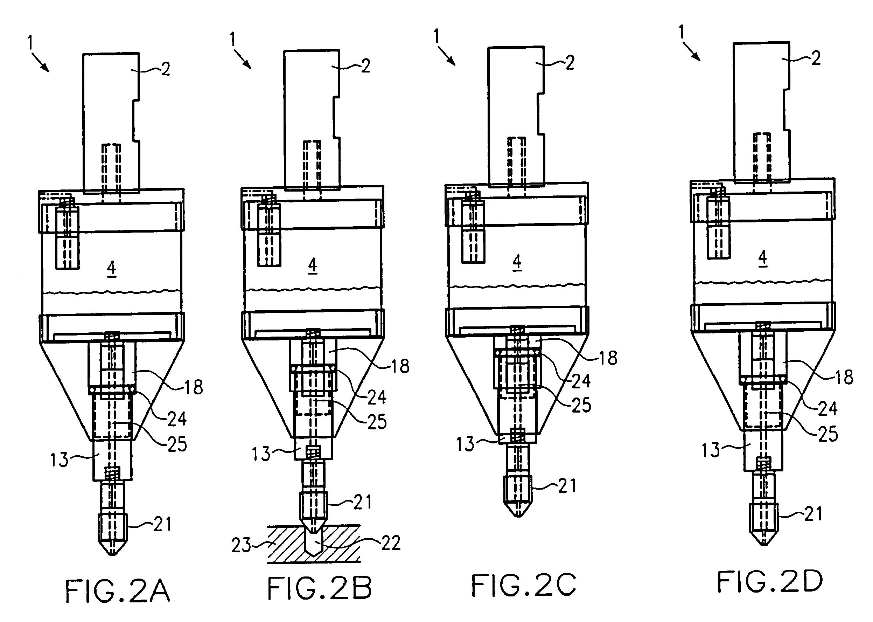

Auch der Kolbenblock 14 weist in einer zum oberen Deckel 3 komplementären Weise zum fluiddichten Abschließen der Aufnahmekammer 4 einen O-Ring 15 auf, der in einer Nut 16 aufgenommen ist. Der in der Aufnahmekammer 4 weitgehend drucklos vorliegende Schmierstoff wird über ein Saugrohr 17 aus der Aufnahmekammer 4 in Richtung zu einer Kolbenkammer 18 gesaugt und zwar während einer Bewegung des Kolbens 13 in Richtung zum Auslassbereich 11 hin. Hierauf wird untenstehend noch unter Bezugnahme auf Fig. 2A bis 2D eingegangen. Ein zwischen der Aufnahmekammer 4 und der Kolbenkammer 18 angeordnetes Rückschlagventil 19 sorgt dafür, dass beim Aufbau von Druck in der Kolbenkammer 18 Schmierstoff nicht in die Aufnahmekammer 4 zurücktransportiert wird.

Am Auslassbereich 11 der Schmierstoffabgabeeinrichtung 12 befindet sich ebenfalls ein Rückschlagventil 20 angeordnet, an dem sich in Fig. 1 lösbar eine Düse 21 angeordnet befindet, die einen kegelspitzförmigen Auslassbereich besitzt.

Nachfolgend wird unter Bezugnahme auf Fig. 2A bis 2D die Funktionsweise der Schmierstoffabgabevorrichtung nach der Erfindung erläutert.

Fig. 2A zeigt die Schmierstoffabgabevorrichtung 1 in ihrer Ausgangsstellung. In der Aufnahmekammer 4 befindet sich Schmierstoff eingefüllt und auch die Kolbenkammer 18 ist mit Schmierstoff befüllt. Die über den Schaft 2 in einem Spannfutter einer Werkzeugmaschine eingespannte Schmierstoffabgabevorrichtung 1 wird über eine Zustellbewegung in Richtung zur Bearbeitungsfläche eines Werkstücks verfahren, so dass die Düse 21 mit ihrem Auslassbereich in ein Kernloch 22 eines schematisch dargestellten Werkstücks 23 eintritt. Die Düse 21 oder auch anderen Bearbeitungsflächen entsprechend geformte Düsen am Rückschlagventil 20 können aus einem gehärteten Werkstoff zum Vermeiden von Verschleiß der Düse im Kontaktbereich mit dem Werkstück 23 ausgebildet sein. Die Zustellbewegung des Spannfutters der Werkzeugmaschine führt zu einer Verschiebebewegung des in der Kolbenkammer 18 verschiebbar aufgenommenen Kolbens 13, der zur Kolbenkammerwand hin über einen O-Ring abgedichtet ist. Die Verschiebebewegung des Kolbens 13 führt zu einem Druckaufbau innerhalb der Kolbenkammer 18, so dass der unter Druck gesetzte Schmierstoff über einen Kolbendurchlass 25 in Richtung zur Düse 21 hin transportiert wird und über die Düse 21 in das Kernloch 22 gespritzt wird.

Über den durch die Zustellbewegung gesteuerten Kolbenhub wird die ausgebrachte Schmierstoffmenge bestimmt, wie dies anhand der Darstellung in Fig. 2C ersichtlich ist. Eine Umkehrung der Zustellbewegung des Spannfutters der Werkzeugmaschine führt aufgrund der in Fig. 1 der Zeichnung ersichtlichen Druckfeder 26 zu einer in der Ebene der Zeichnung in Richtung nach unten gerichteten Bewegung des Kolbens 13 in der Kolbenkammer 18, wodurch in der Kolbenkammer 18 ein Unterdruck aufgebaut wird, der zu einem Öffnen des Rückschlagventils 19 führt, so dass über das in Fig. 1 der Zeichnung dargestellte Saugrohr 17 aus der Aufnahmekammer 4 Schmierstoff in die Kolbenkammer 18 transportiert wird und die Schmierstoffabgabevorrichtung 1 zu einem weiteren Arbeitsspiel bereit ist. Die Schmierstoffabgabevorrichtung 1 nimmt dabei ihre in Fig. 2D gezeigte Ausgangsstellung ein.

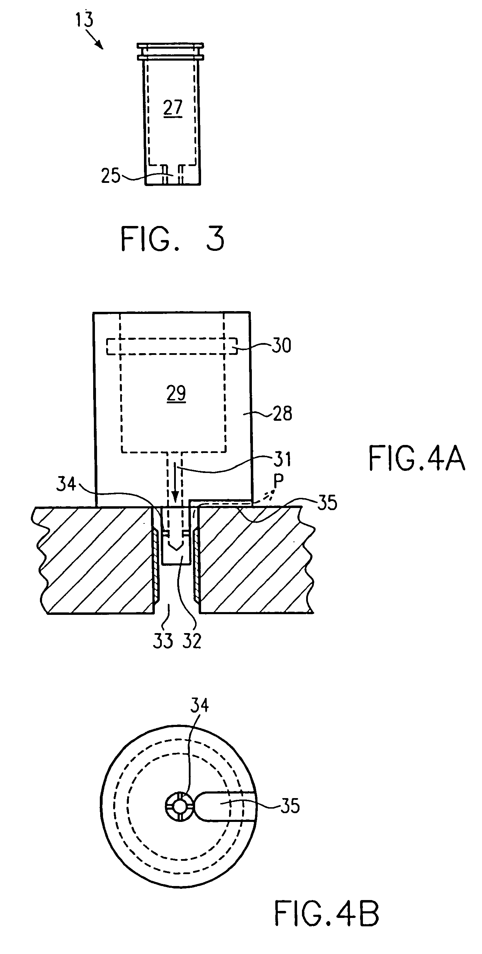

Fig. 3 der Zeichnung zeigt in einer Draufsichtansicht den Aufbau des Kolbens 13. Wie es ohne weiteres ersichtlich ist, weist der Kolben 13 einen Schmierstoffdurchlass 25 auf und besitzt im Inneren seiner kreiszylinderförmigen Konfiguration eine Kammer 27, an deren Boden sich die in Fig. 1 dargestellte Druckfeder 26 abstützt.

Fig. 4A zeigt in einer vergrößerten Darstellung eine kreiszylinderförmige Düse 28, die über einen ihrer Innenseite ausgebildete Kammer 29 lösbar am Rückschlagventil 20 angebracht werden kann und mittels eines Schiebesitzes eines in der ringförmigen Nut 30 angeordneten nicht näher dargestellten O-Rings an dem Rückschlagventil 20 befestigt wird.

Der über den Kolbendurchlass 25 transportierte unter Druck gesetzte Schmierstoff gelangt über den Kanal 31 in den Auslassbereich 32 der Düse 28, der sich in einem Kernloch 33 angeordnet befindet und tritt über radial zum Kanal 31 verlaufende Durchlässe 34 aus der Düse 28 aus. Mit der dargestellten Düse 28 können beispielsweise Durchgangslöcher für die Herstellung von Gewinden M3 bis M8 mit Schneidöl versorgt werden. Auch ist es möglich, mit der dargestellten Düse Sacklöcher für die Herstellung von Gewinden von beispielsweise M5 bis M8 mit Schneidöl zu versorgen.

Fig. 4B zeigt die in Fig. 4A dargestellte Düse 28 in einer Ansicht von unten, aus der ersichtlich wird, dass die Düse 28 vier radial verlaufende Durchlässe 34 zum Ausbringen des Schmierstoffes besitzt und einen Luftaustrittsspalt 35, über den die Luft aus einem Sackloch entweichen kann, wenn die Düse 28 mit ihrem Austrittsbereich 32 in das Sackloch eingeführt ist, so dass die im Sackloch vorhandene Luft über den Luftaustrittsspalt 35 austreten kann, wenn sie von dem aus den Durchlässen 34 austretenden Schmierstoff verdrängt wird, was in Fig. 4A anhand des Pfeiles P ersichtlich ist.

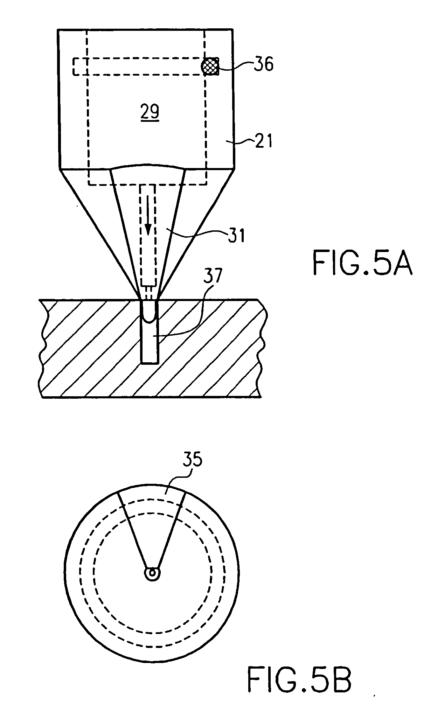

Fig. 5A und Fig. 5B schließlich zeigen vergrößerte Ansichten der bereits vorstehend erwähnten Düse 21. Wie es ohne weiteres ersichtlich ist, weist die Düse 21 in zu einer der Düse 28 ähnlichen Weise eine Kammer 29 auf, in der die Außenwand des Rückschlagventils 20 aufgenommen wird, wenn die Düse 21 über den O-Ring 36 fixiert am Rückschlagventil 20 angebracht wird. Der über den Kanal 31 austretende Schmierstoff wird unter Druck in das Sackloch 37 gespritzt, so dass die in diesem vorhandene Luft über den in Fig. 5B dargestellten Luftaustrittsspalt 35 der Düse 21 aus dem Sackloch 37 austreten kann. Die dargestellte Düse 21 ist beispielweise dafür geeignet, Sacklöcher für die Herstellung von Gewinden M1 oder M2 mit Schneidöl zu versorgen, die einen Kernlochdurchmesser von 0.75 mm aufweisen.

Aufgrund der um die Längsmittelachse der Schmierstoffabgabevorrichtung 1 drehbaren Anordnung des Saugrohres 17 kann die Schmierstoffabgabeeinrichtung 12 in jeder Winkellage der Schmierstoffabgabevorrichtung 1 Schmierstoff aus der Aufnahmekammer 4 ansaugen, so dass die Anwendung der Schmierstoffabgabevorrichtung 1 nicht auf einen Betrieb in vertikaler Richtung beschränkt ist, sondern auch in horizontaler Richtung oder einer Winkellage dazwischen betrieben werden kann.

Hinsichtlich vorstehend im Einzelnen nicht näher erläuterter Merkmale der Erfindung wird im Übrigen ausdrücklich auf die Patentansprüche und die Zeichnung verwiesen.

## Patentansprüche

1. Vorrichtung zur Abgabe eines Schmierstoffes an eine Bearbeitungsfläche eines Werkstückes, mit einer Schmierstoffabgabeeinrichtung (12) und einem Schaft (2) zur Aufnahme der Vorrichtung in einem Spannfutter einer Werkzeugmaschine, **dadurch gekennzeichnet, dass** in der im Spannfutter gehalterten Vorrichtung (1) ein axial beweglicher Kolben (13) der Schmierstoffabgabeeinrichtung (12) angeordnet ist, der durch ein Andrücken der Vorrichtung (1) an das Werkstück in die Vorrichtung (1) einschiebbar ist, um auf den innerhalb der Vorrichtung (1) vorliegenden Schmierstoff einen Druck auszuüben und dadurch den Schmierstoff über einen Auslassbereich (11) auszubringen.

2. Vorrichtung nach Anspruch 1, **dadurch gekennzeichnet, dass** der Schmierstoff in einer mit der Schmierstoffabgabeeinrichtung (12) in Fluidverbindung stehenden Aufnahmekammer (4) der Vorrichtung weitgehend drucklos vorliegt und die Aufnahmekammer (4) wiederbefüllbar ist.

3. Vorrichtung nach Anspruch 1 oder 2, **dadurch gekennzeichnet, dass** zwischen der Aufnahmekammer (4) und der Schmierstoffabgabeeinrichtung (12) ein Rückschlagventil (19) vorgesehen ist.

4. Vorrichtung nach einem der Ansprüche 1 bis 3, **dadurch gekennzeichnet, dass** im Auslassbereich (11) der Schmierstoffabgabeeinrichtung (12) ein Rückschlagventil (20) vorgesehen ist.

5. Vorrichtung nach einem der Ansprüche 1 bis 4, **dadurch gekennzeichnet, dass** der Kolben (13) gegen eine Druckfeder (26) bewegbar ist, so dass der in einer Kolbenkammer (18) vorliegende Schmierstoff unter Druck gesetzt und über eine am Auslassbereich (11) vorgesehene Düse (21, 28) ausgebracht wird.

6. Vorrichtung nach Anspruch 5, **dadurch gekennzeichnet, dass** der Kolben (13) mittels einer Zustellbewegung der an der Bearbeitungsfläche anliegenden Vorrichtung (1) gegen die Druckfeder (26) in Richtung der Kolbenkammer (18) axial bewegbar ist und der unter Druck gesetzte Schmierstoff durch einen Kolbendurchlass (25) hindurch tritt.

7. Vorrichtung nach einem der Ansprüche 1 bis 6, **dadurch gekennzeichnet, dass** am Auslassbereich (11) der Schmierstoffabgabeeinrichtung (12) unterschiedlich geformten Bearbeitungsflächen entsprechende Düsen (21, 28) anbringbar sind.

8. Vorrichtung nach einem der Ansprüche 2 bis 7, **dadurch gekennzeichnet, dass** zwischen der Aufnahmekammer (4) und der Schmierstoffabgabeeinrichtung (12) ein um die Längsmittelachse der Vorrichtung drehbares Saugrohr (17) angeordnet ist, über das mittels einer Rückstellbewegung des Kolbens (13) Schmierstoff in die Kolbenkammer gesaugt wird.

9. Vorrichtung nach einem der Ansprüche 2 bis 8, **dadurch gekennzeichnet, dass** die Aufnahmekammer (4) eine Einfüllöffnung (9) für Schmierstoff besitzt, an der ein Rückschlagventil angeordnet ist.

10. Vorrichtung nach einem der Ansprüche 2 bis 9, **dadurch gekennzeichnet, dass** die Aufnahmekammer (4) derart ausgebildet ist, dass der Schmierstofffüllstand von außen sichtbar ist.
